# EUROPÄISCHE PATENTANMELDUNG

(11) **EP 0 878 802 A1**
(43) Veröffentlichungstag der Anmeldung: **18.11.1998**
(21) Anmeldenummer: 97107792.0
(22) Anmeldetag: 13.05.1997
(51) Int. Cl.: G11B 33/04, G11B 23/023

(54) **Bevorratungsbox für CD's, Kassetten oder dergl.**

(71) Anmelder: Schumacher & Kessler GmbH, 57223 Kreuztal (DE)
(72) Erfinder: Moritz, Werner, 57072 Siegen (DE)
(74) Vertreter: Müller, Gerd, Dipl.-Ing.

(57) **Zusammenfassung**

Eine Bevorratungsbox, die mindestens ein Aufnahmefach aufweist, das durch Längsstege unterteilt ist, mit einer federbeaufschlagten Ein- und Ausrückmechanik zum selektiven Entnehmen und/oder Einstellen von CD's, Kassetten oder dergleichen, wird handhabungs- und bedienungsfreundlicher und läßt sich modular verwenden, wenn der Ein- und Ausrückmechanismus individuelle, eine CD, Kassette oder dergleichen jeweils vorne und hinten übergreifende Schub- und Verriegelungsstangen aufweist, die mit einer an ihren beiden Enden jeweils mit mindestens einem Schaltnocken ausgebildeten Schaltnockenhülse versehen sind, die konzentrisch von einer in Umfangsrichtung schrittweise weiterschaltbaren Schalthülse umschlossen ist.

## Beschreibung

Bevorratungsbox, die mindestens ein Aufnahmefach aufweist, das durch Längsstege unterteilt ist, mit einer federbeaufschlagten Ein- und Ausrückmechanik zum selektiven Entnehmen und/oder Einstellen Von CD's, Kassetten oder dergleichen.

Zum Bevorraten von CD's, Kassetten oder dergleichen sind Bevorratungsboxen, in denen diese geschützt vor Beschädigung und z.B. alphabetisch geordnet aufbewahrt werden, in mannigfacher Ausführungsform bekannt, z.B. als CD-Turm oder -ständer. Die meisten dieser Bevorratungsboxen weisen mehrere Aufnahmefächer auf, die durch Stege unterteilt sind, zwischen denen die CD's, Kassetten oder dergleichen axial geführt werden. Um die CD's, Kassetten oder dergleichen einzeln aus einem Aufnahmefach entnehmen und/oder einstellen zu können, sind die Aufnahmefächer mit einer federbeaufschlagten Ein- und Ausrückmechanik versehen. Die Feder des Ein- und Ausrückmechanismus muß sich bei einem Entnahme- und/oder Einstellvorgang einer CD, Kassette oder dergleichen gegen den auf sie ausgeübten Druck abstützen. Aus diesem Grunde muß an der der Betätigungsseite gegenüberliegenden Seite eine Abstützfläche für die Feder vorhanden sein. Die erforderliche Abstützfläche wird bei bekannten Bevorratungsboxen für CD's, Kassetten oder dergleichen durch eine komplett geschlossene Rückwand bereitgestellt.

Bei einer durch das DE 82 23 904 U1 bekanntgewordenen Bevorratungsbox ist eine Kassette von der offenen Behälter-Vorderseite in ein Kassettenfach einschiebbar. Zum Entnehmen der Kassette ist in der Rückwand des Kassettenfachs ein Auswurfelement angeordnet. Dieses besteht aus einem zwischen zwei Endlagen hin- und herschiebbaren Stempel, der rückwärts in einen Stift ausläuft, und einem um den Stift umlaufenden Kulissenring; der Stempel, der Stift und der Kulissenring werden hierbei in einer außerdem eine Druckfeder aufnehmenden Hülse geführt. In der eingeschobenen Endposition der Kassette wird das Auswurfelement eingerastet; die Arretierung löst sich bei nochmaligem Druck auf den Kopf des Auswurfelementes, wonach die Kassette federkraftbeaufschlagt aus dem Kassettenfach herausgeschoben wird. Die Bevorratungsboxen bzw. Aufbewahrungseinheiten lassen sich mittels Schwalbenschwanznuten und -führungen zu einem beliebigen Archivierungsverbund zuammensetzen.

Aus der DE 88 02 795.3 U1 ist ein Aufbewahrungssystem für CD's bekannt; es besteht aus einem kastenförmigen, nach vorn offenen Behälter, in den von oberen und unteren Gleitschienen gehalten mehrere CD's nebeneinander herausnehmbar angeordnet sind. In Führungsnuten oberhalb der oberen Gleitschienen ist jeweils eine sich über die gesamte Behältertiefe bzw. -länge einer CD erstreckende und nach vorn herausziehbare Leiste angeordnet. Diese weist vorne ein Griffstück und hinten einen die CD hintergreifenden Mitnehmersteg auf, der beim Herausziehen der Leiste die entsprechende CD mitnimmt.

Eine aus der DE 89 01 835.4 bekannte Bevorratungsbox für CD's, Kassetten oder dergleichen besitzt bodenseitige feste Stege mit dazwischenliegenden schwenkbaren Stegen in Form von leicht gekrümmten Leisten. Die bodenseitigen Stege wirken mit deckelseitigen, ebenfalls schwenkbaren Stegen zusammen. Bei in die Einzelfächer der Bevorratungsbox eingesetzten Kassetten wird deren Lage durch einen Sperrzahn gesichert, der sich beim Einführen einer Kassette absenkt. Zu dem Sperrzahn gehört ein Absenker mit einer Drucktaste. Bei deren Betätigung wird eine bei ihrer Einlagerung eine Biegefeder vorspannende Kassette federbeaufschlagt ausgestoßen. Mehrere dieser Behälter lassen sich durch Formschluß-Verbindungen zu einem Behälterverbund zusammensetzen.

Der Erfindung liegt die Aufgabe zugrunde, eine Bevorratungsbox der eingangs genannten Art handhabungs- und bedienungsfreundlicher zu gestalten sowie variabler, insbesondere modular verwendbar auszubilden.

Diese Aufgabe wird erfindungsgemäß dadurch gelöst, daß der Ein- und Ausrückmechanismus individuelle, eine CD, Kassette oder dergleichen jeweils vorne und hinten von unten her über- bzw. untergreifende Schub- und Verriegelungsstangen aufweist, die mit einer an ihren beiden Enden mit mindestens einem Schaltnocken ausgebildeten Schaltnockenhülse versehen sind, die konzentrisch von einer in Umfangsrichtung schrittweise weiterschaltbaren Schalthülse umschlossen ist. Der Erfindung liegt hierbei der Gedanke zugrunde, die das Ein- und Ausrücken der Schub- und Verriegelungsstangen bewirkenden Federn im Inneren des Aufnahmefaches abzustützen, so daß eine geschlossene Rückwand entbehrlich ist. Durch einen Fingerdruck auf die federbeaufschlagte, vorzugsweise zweiteilige Schub- und Verriegelungsstange wird der der Betätigungsseite zugewandte Schaltnocken - im folgenden als vorderer Schaltnocken bezeichnet - zum Weiterschalten zur Schalthülse hin bewegt. Die Zweiteiligkeit der Schub- und Verriegelungsstange, wobei die beiden Teilstangen vorteilhaft ineinandersteckbar und durch z.B. eine Schraube miteinander zu verbinden sind, erlaubt es auf einfache Weise, die Druckfeder axial entfernt von den Schaltnockenhülsen und die Schalthülse zwischen den beiden Schaltnockenhülsen anzuordnen.

Die Erfindung sieht weiterhin vor, daß die Schub- und Verriegelungsstangen in einem in das Aufnahmefach einsetzbaren, die Längsstege und damit die Führungen für die einzustellenden CD's, Kassetten oder dgl. aufweisenden Basisteil unter Flur angeordnet sind. Die fertigmontierte individuelle Ein- und Ausrückmechanik läßt sich als komplette Einheit in dazu vorgesehene Ausnehmungen bzw. kammerartige Langlöcher des Basisteils einrasten. Das so bestückte Basisteil kann dann wie eine Schublade, geführt bzw. niedergehalten von Leisten an den beiden Innenflächen der Seitenwände, auf dem Boden des Aufnahmefaches gleitend in die Bevorratungsbox eingeschoben werden.

Es empfiehlt sich, daß das Basisteil an seiner Rückwand mit einem hakenartigen, in situ Rastnocken des Fachbodens hintergreifenden Rastkopf aufweisenden Federzungen ausgebildet ist. Damit läßt sich eine sichere Arretierung des Basisteils in der Bevorratungsbox erreichen. Zum Entsperren brauchen die Hakenverbindungen lediglich gelöst zu werden, beispielsweise mit Hilfe eines Schraubenzieher, der durch in einer Flucht mit den Rastnocken liegenden Ausnehmungen der Gehäuserückwand gesteuert werden könnte.

Die Schalthülse ist nach einem Vorschlag der Erfindung an beiden Stirnseiten sägezahnförmig ausgebildet. Auf diese Weise wird erreicht, daß gleichzeitig mit der Bewegung des vorderen Schaltnockens zur Schalthülse hin der von der Betätigungsseite entfernte - im folgenden als hinterer Schaltnocken bezeichnete-Schaltnocken die Schalthülse entriegelt. Der hintere Schaltnocken wird nämlich in Betätigungsrichtung der Schub- und Verriegelungsstange von der Schalthülse wegbewegt und kommt damit frei vom Eingriff in die hinteren Sägezähne. Beide Schaltnocken der Schaltnockenhülsen weisen zu den Sägezähnen der Schalthülse, in die sie beim Vor- bzw. Rückhub der Schub- und Verriegelungsstange entsprechend dem bei der Bewegung zurückgelegten Weg zunehmend weiter eintauchen, komplementäre Schrägflächen auf. Diese ermöglichen im Zuge des zunehmenden Formschlusses in vorteilhafter Weise ein schrittweises Weiterschalten der Schalthülse in Umfangsrichtung. Die Schrägfläche des vorderen Schaltnockens greift nämlich zunächst nur an die Schrägfläche eines korrespondierenden Sägezahnes der der Betätigungsseite zugewandten Stirnseite - im folgenden vordere Stirnseite genannt - der Schalthülse an. Durch weiteren Druck auf die Schub- und Verriegelungsstange und den dabei zunehmenden Formschluß zwischen Sägezahn und Schrägfläche des vorderen Schaltnockens wird die Schalthülse dann in Umfangsrichtung gedreht. Die Schalthülse selbst ist über eine Umfangsmanschette in dem Basisteil lagesicher gegen Axialverstellungen eingebettet.

Nach einer bevorzugten Ausgestaltung der Erfindung ist die Schalthülse an ihrer von der Betätigungsseite abgewandten Stirnseite - im folgenden hintere Stirnseite genannt - jeweils an jedem zweiten Sägezahn mit einer achsparallelen Führungsnut ausgebildet. Der Schalthülse sind in diesem Fall Schaltnockenhülsen mit jeweils vier Schaltnocken zugeordnet. Eine der achsparallelen Führungsnuten befindet sich nach der Drehung der Schalthülse in einer, Flucht mit dem hinteren Schaltnocken, der sich von der Schalthülse entfernt hat. Wenn jetzt kein Druck mehr auf die Schub- und Verriegelungsstange ausgeübt wird, wird diese von der sich enstspannenden Feder entgegen der Betätigungsrichtung nach außen gedrückt. Das ist möglich, weil sich gleichzeitig der hintere Schaltnocken in die mit ihm fluchtende achsparallele Führungsnut der Schalthülse bewegen kann.

Nach einem Vorschlag der Erfindung weist die hintere Teilstange einen Aufsatz auf, der eine fluchtend mit der Ebene des in das Aufnahmefach eingesetzten Basisteils verlaufende Auflagefläche aufweist, auf der das hintere Ende der eingeschobenen CD ruht. Bei sich entspannender Feder wird daher die im Aufnahmefach stehende CD durch einen vertikalen Schenkel des im Profil vorzugsweise L-förmigen Aufsatzes zur Betätigungsseite hin geschoben.

Ein in der vorderen Teilstange vorteilhaft schwenkbar gelagerter Sperrhebel ist nach einem Vorschlag der Erfindung an seinem der Betätigungsseite zugewandten Ende mit einem nach oben ragenden Vorsprung ausgebildet. Sychron zum Aus- bzw. Verschieben der CD zur Betätigungsseite hin schwenkt der Sperrhebel nach unten. Der Sperrhebel ist zu diesem Zweck hinter seinem Schwenklager nach unten abgewinkelt. Das abgewinkelte Hebeteil trifft beim Ausrückhub auf eine Kante der Aufnahmeöffnung für die Schub- und Verriegelungsstange in dem Basisteil, so daß der Sperrhebel zwangsweise und selbsttätig um das Schwenklager wegkippt; das vordere Schwenkhebelteil kann damit nach unten wegtauchen, und der nach oben ragende Vorsprung gelangt in eine Position unterhalb der Ebene des Aufnahmefaches bzw. Basisteils. Die CD wird dann vorne nicht mehr begrenzt bzw. hintergriffen und kann folglich durch den vertikalen Schenkel des L-förmigen Aufsatzes soweit aus dem Aufnahmefach ausgeschoben werden, bis der L-förmige Aufsatz an der Rückwand des Basisteils anliegt, womit ein Weiterbewegen nicht mehr möglich ist. Die CD kann jetzt problemlos entnommen werden, weil sie mit einem hinlänglichen Teilbereich aus dem Aufnahmefach hinausragt. Beim Einstellhub kippt der Sperrhebel aufgrund eines dann nach unten abgewinkelten vorderen Hebelteils wieder zurück in die obige Ausgangslage, in der der Vorsprung nach oben ragt.

Zum Einlagern der CD oder dergleichen wird diese zwischen zwei Längsstege des Basisteils der Bevorratungsbox und auf die nach vorne hinausragende, in dem den Sperrhebel aufnehmenden Abschnitt im Querschnittrechteckige Schub- und Verriegelungsstange gestellt. Durch Druck auf die Schub- und Verriegelungsstange schiebt sich diese gegen die Kraft der sich dabei vorspannenden Feder unter Flur vollständig in das Aufnahmefach des Basisteils. Dabei wird die CD durch den Vorsprung des Sperrhebels hintergriffen, der zuvordurch das zwangsweise Wegkippen des Sperrhebels wieder selbsttätig nach oben verstellt worden ist. Gleichzeitig wird der hintere Schaltnocken aus der achsparallelen Führungsnut geschoben und die Schalthülse damit freigegeben. Greift dann die Schrägfläche des vorderen Schaltnockens an die Schrägfläche eines Sägezahnes der vorderen Stirnseite der Schalthülse an, wird diese bei weiterem Druck auf die Schub- und Verriegelungsstange in Umfangsrichtung gedreht.

Bei Wegnahme des Druckes stellt die sich entspannende Feder die Schub- und Verriegelungsstange soweit zurück, bis der hintere Schaltnocken in einen nach der Drehung der Schalthülse jetzt mit ihm fluchtenden Sägezahn der hinteren Stirnseite der Schalthülse greift. Dabei liegen die geraden Flächen des Schaltnockens und des Sägezahnes formschlüssig aneinander. Dadurch wird einerseits eine weitere Drehung der Schalthülse in Umfangsrichtung verhindert und andererseits die Schub- und Verriegelungsstange festgelegt, die von der vorgespannten Feder nicht weiter entgegen der Betätigungsrichtung verstellt werden kann. Die eingelagerte CD wird jetzt zwischen dem vertikalen Schenkel des L-förmigen Aufsatzes und dem nach oben ragenden Vorsprung des Sperrhebels lagesicher in dem Aufnahmefach des Basisteils gehalten.

Der Erfindung liegt als weiterer Gedanke zugrunde, gleichartige Bevorratungsboxen variabel miteinander zu kombinieren und zu halten, so daß sich ein modulares, die Nutzer- und Bedienungsfreundlichkeit weiter verbesserndes Bevorratungsboxen-System erreichen läßt.

Nach einer Ausgestaltung der Erfindung wird dazu vorgeschlagen, in den Eckbereichen an der Rückwand der Bevorratungsbox Winkelrippen anzuordnen. Es werden also bei jeder Bevorratungsbox vier äußere Winkelrippen angeordnet, deren horizontale und vertikale Rippen sich von den Eckbereichen aus jeweils zueinander erstrecken. Jeder dieser äußeren Winkelrippen ist vorteilhaft eine zu ihnen parallel verlaufende innere Winkelrippe zugeordnet. Alle Winkelrippen sind nach einem Vorschlag der Erfindung an ihren horizontalen und vertikalen Rippen jeweils mit Lageraugen versehen. Dadurch, daß jede Rippe sowohl in horizontaler als auch in vertikaler Ebene ein Lagerauge aufweist ist es möglich, sowohl über- und/oder untereinander als auch nebeneinander stehende Bevorratungsboxen miteinander zu verbinden. Denn paarweise zusammengestellte Boxen besitzen stets fluchtend zueinander liegende horizontale und/oder vertikale Lageraugen, in die sich ein Boxenpaar miteinander verbindende und die somit modular zusammengesetzte Baueinheit stabilisierende Verriegelungselemente anordnen lassen.

Nach einem Vorschlag der Erfindung erfolgt die Verbindung von zwei gleichen, neben- und/oder übereinander stehenden Bevorratungsboxen über ein in Form eines Schnellspannhebels ausgebildetes Verriegelungselement. Der Schnellspannhebel ist mit einem abgeflachten, Außenradien aufweisenden Schulterstück ausgebildet, das seitlich vorspringende, entsprechend abgeflachte Einrastzapfen aufweist. Das Schulterstück wird - am Beispiel von nebeneinander angeordneten Boxen - mit seinen Flachseiten in die horizontal fluchtenden vier Lageraugen der jeweils inneren und äußeren Winkelrippen des Boxenpaares eingeführt. Durch Verschwenken des Schnellspannhebels um 90^{o} wird das Schulterstück einschließlich der Einrastzapfen in den Lageraugen gedreht, wodurch die beiden Bevorratungsboxen fest miteinander verbunden werden, weil die Außenradien des Schulterstückes einschließlich der damit übereinstimmend schulterartig ausgebildeten Einrastzapfen ein Spreizen der demgegenüber im Durchmesser bzw. in ihrem Öffnungsmaß kleineren Lageraugen bewirken.

Der Schnellspannhebel weist vorzugsweise eine von dem Schulterstück beabstandete Zentralöffnung auf, in die die hinter den Lageraugen endenden Vertikalrippen der äußeren Winkelrippen eingreifen. Dadurch kann sich der Schnellspannhebel nach einer Drehung um 90^{o} nicht nur bündig an die Rückwand der Bevorratungsbox anlegen, sondern es wird weiterhin auch noch ein kraftschlüssiges Festlegen der beiden Boxen erreicht. Durch die von der Zentralöffnung umschlossenen Rippenenden wird ein seitliches Auseinanderziehen der Bevorratungsboxen sicher verhindert. Die Lagerung des Schnellspannhebels mit seinen schulterartigen Einrastzapfen in den Lageraugen der inneren Winkelrippen schließt zudem ein Verdrehen der beiden Bevorratungsboxen gegeneinander aus, da sich das Schulterstück nicht ausknöpfen kann.

Wenn nach einem Vorschlag der Erfindung vorteilhaft eine Wandschiene mit in die Lageraugen der Winkelrippen einrastbaren, an zwei gegenüberliegenden Seiten abgeflachten, schulterartige Außenradien aufweisenden Verriegelungsachsen versehen ist, lassen sich die Bevorratungsboxen auf einfache Art und Weise auch stationär unterbringen, z .B. an einer Wand eines Wohnraumes. Nach dem Anschrauben der Wandschiene braucht die Bevorratungsbox nämlich nur auf die zuvor in die Wandschiene gesteckten Verriegelungsachsen aufgedrückt und die aus einem Rundprofil abgeflachten Verriegelungsachsen um 90^{o} verschwenkt zu werden, um die Box an der Wandschiene festzulegen. Das Spreizen der Lageraugen stellt sich aufgrund der übereinstimmenden Kontur der Verriegelungsstangen und des Schnellspannhebels wie für diesen weiter oben beschrieben ein.

Das Verschwenken der Verriegelungsachsen läßt sich vorzugsweise mit einem auf jeder Verriegelungsachse angeordneten Betätigungshebel erreichen.

Weitere Einzelheiten und Vorteile der Erfindung ergeben sich aus den Ansprüchen und der nachfolgenden Beschreibung, in der in den Zeichnungen dargestellte Ausführungsbeispiele der Erfindung näher erläutert sind. Es zeigen:
- Fig. 1: eine Bevorratungsbox mit zwei Aufnahmefächern für CD's, die in jedem Fach für jede CD mit einer in einem Basisteil unter Flur angeordneten Ein- und Ausrückmechanik versehen ist, perspektivisch dargestellt;
- Fig. 2: einen Längsschnitt durch das Basisteil, der eine zweiteilige Schub- und Verriegelungsstange einer Ein- und Ausrückmechanik für eine CD oder dergleichen zeigt;
- Fig. 3a, 3b: die vordere Teilstange der Schub- und Verriegelungsstange gemäß Fig. 2 in der Längsansicht (Fig. 3a) und in der Draufsicht (Fig. 3b) dargestellt;
- Fig. 4a, 4b: die hintere, einstückig mit einer Schaltnockenhülse ausgebildete Teilstange der Schub- und Verriegelungsstange gemäß Fig. 2, in der Längsansicht (Fig. 4a) und von hinten bzw. links gesehen (Fig. 4b) dargestellt;
- Fig. 5: eine Längsansicht einer auf der vorderen Teilstange (Fig. 3a, 3b) anzuordnenden Schaltnockenhülse;
- Fig. 6: die hintere Teilstange gemäß Fig. 4a und als Einzelheit der komplementären vorderen Teilstange deren Schaltnockenhülse, in der Längsansicht dargestellt;
- Fig.7a, 7b, 7c: als Einzelheit eine Schalthülse, in der Längsansicht sowie als Teilschnitt (Fig. 7a) und von ihren beiden Stirnseiten (Fig. 7b, 7c) her gesehen dargestellt;
- Fig.8a, 8b: als Einzelheit einen Sperrhebel in der Längsansicht (Fig. 8a) und in der Draufsicht (Fig. 8b) dargestellt;
- Fig.9a, 9b: ein miteinander verriegeltes Boxenpaar - eine Bevorratungsbox nur teilweise gezeigt -von hinten gesehen (Fig. 9a) und eine einzelne Box des Boxenpaares in der Draufsicht (Fig. 9b) dargestellt;
- Fig. 10: einen perspektivisch dargestellten Schnellspannhebel;
- Fig. 11: zwei übereinander angeordnete, an einer Wandschiene stationär festgelegte Bevorratungsboxen, perspektivisch dargestellt;
- Fig.12a, 12b,12c: als Einzelheit der Wandschiene eine in drei Ansichten dargestellte Verriegelungsachse;
- Fig. 13: in der Draufsicht als Einzelheit einer Bevorratungsbox deren schubladenartiges Basisteil;
- Fig. 14: das Basisteil in der Vorderansicht;
- Fig. 15: das Basisteil von unten gesehen; und
- Fig. 16: einen Schnitt durch das Basisteil entlang der Linie XVI - XVI von Fig. 15

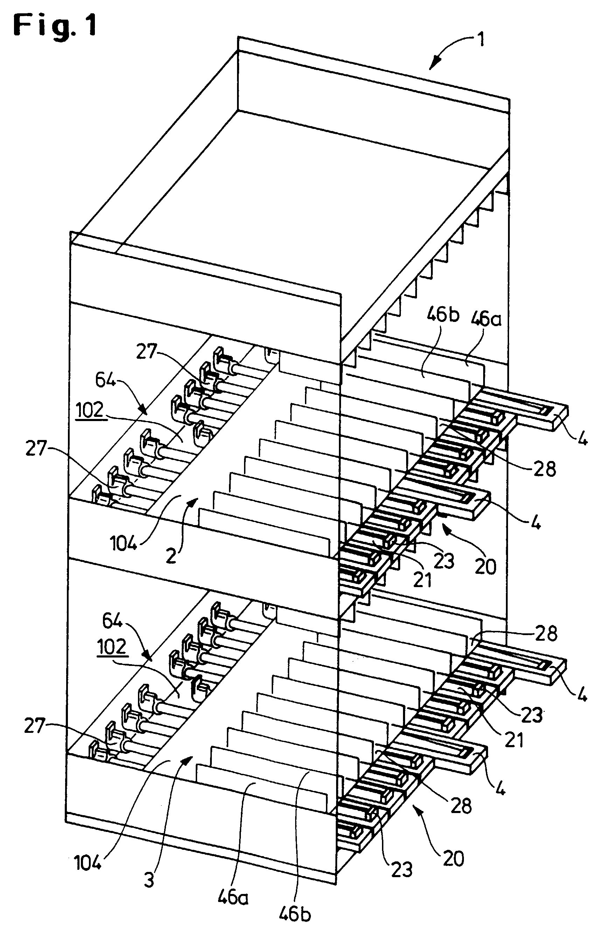

In Figur 1 ist eine Bevorratungsbox 1 mit zwei Aufnahmefächern 2, 3 für CD's oder dergl. dargestellt. Beide Aufnahmefächer 2, 3 zeigen zwei der sämtlich in einem gemeinsamen Basisteil 104 angeordneten Schub- und Verriegelungsstangen 4 einer Ein- und Ausrückmechanik in ausgerückter Stellung.

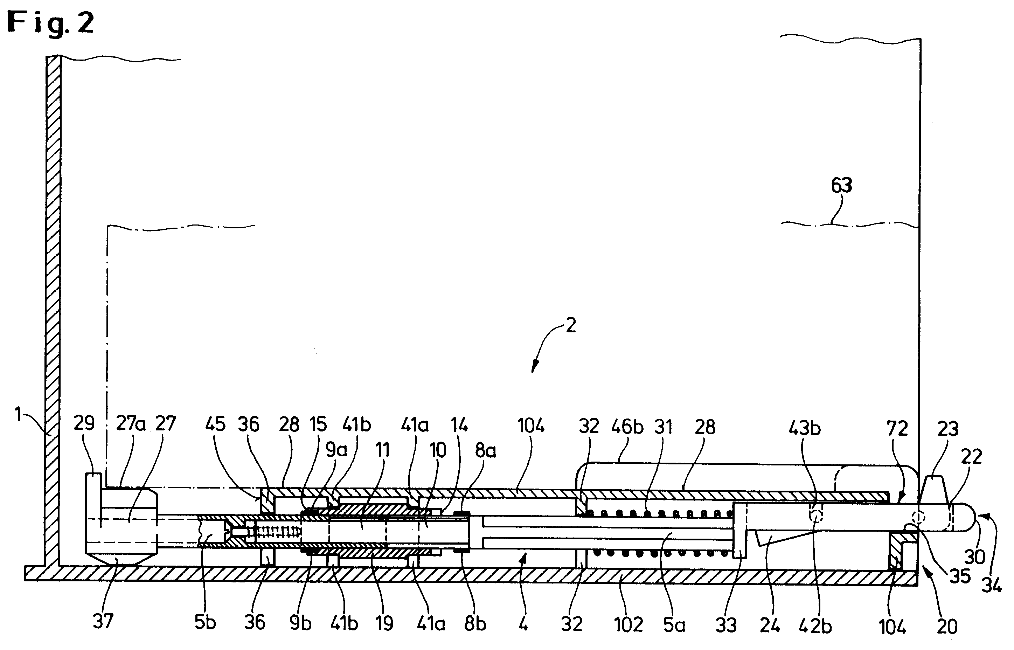

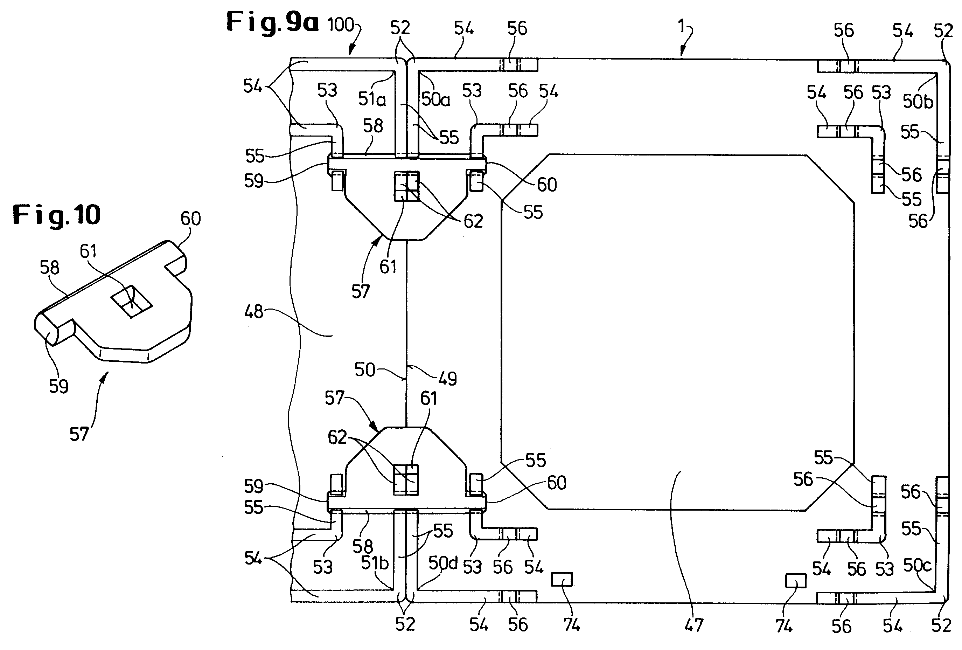

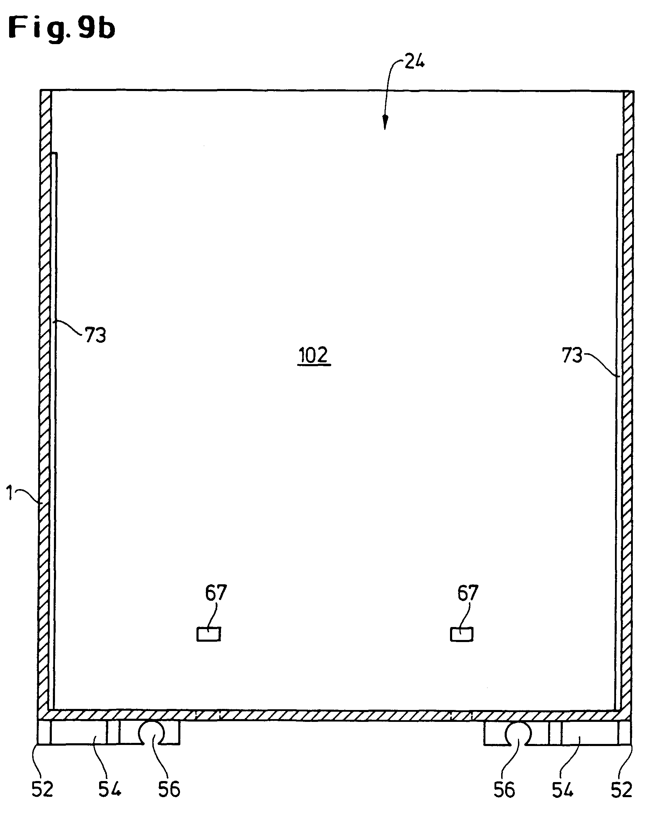

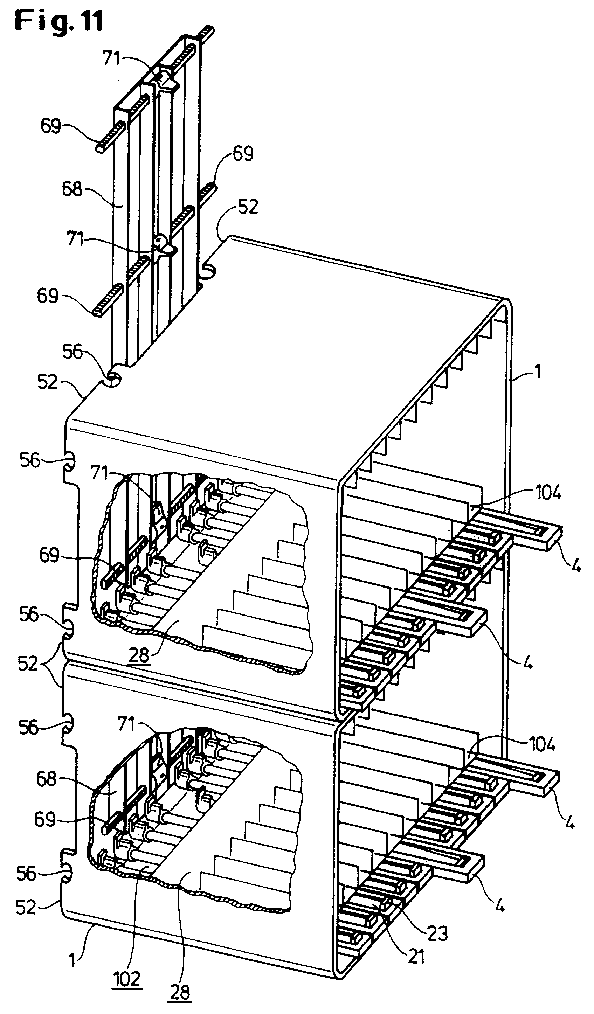

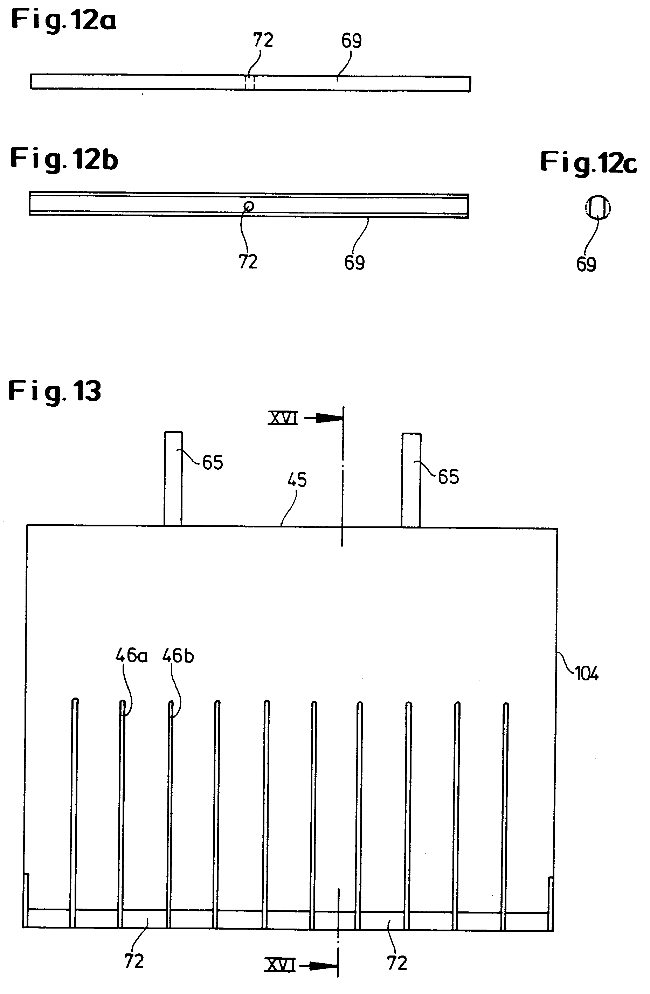

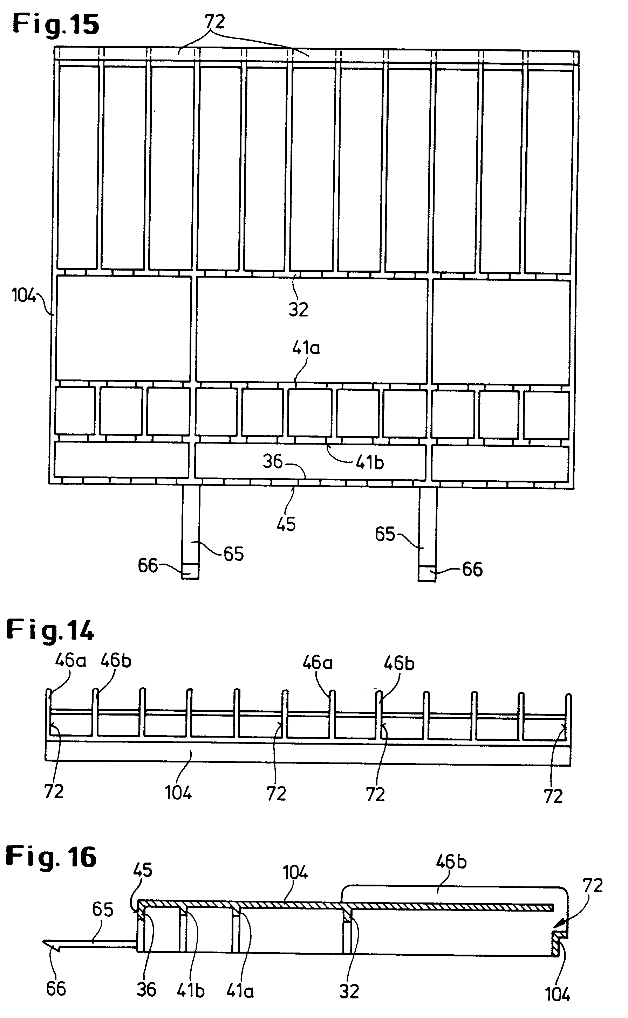

Das Basisteil 104 ist im einzelnen in den Fig. 13 bis 16 gezeigt. Es besitzt an seiner Oberseite mehrere parallel zueinander verlaufende Längsstege 46a, 46b, die zwischen sich eine Aufnahme für eine einzuschiebende CD 63 (vgl. Fig. 2) oder dergl. definieren. Die Unterseite (vgl. Fig. 15) ist mit kammerartigen Ausnehmungen bzw. Langlöchern ausgebildet, in die sich die fertigmontierten individuellen Schub- und Verriegelungsstangen 4 der Ein- und Ausrückmechanik setzen lassen. An der Vorder- bzw. Betätigungsseite treten die Schub- und Verriegelungsstangen 4 aus separaten, rechteckigen Wandöffnungen 72 aus dem Basisteil 104 heraus. An der Rückwand des Basisteils sind zwei hakenartige Rastköpfe 66 aufweisende Federzungen 65 angeordnet. Das mit der kompletten Ein- und Ausrückmechanik für individuelle Betätigung bestückte Basisteil 104 wird schubladenartig in das Aufnahmefach 2 bzw. 3 eingeschoben, wobei es einerseits auf dem Fachboden 102 gleitet und andererseits von Leisten 73 (vgl. Fig. 9b) an den Innenflächen der Seitenwände der Bevorratungsbox 1 geführt wird. In der Endposition (vgl. die Fig. 1 und 11) hintergreifen die Rastköpfe 66 der Federzungen 65 auf dem Fachboden 102 angeordnete Rastnocken 67 (vgl. Fig. 9b); das schubladenartige Basisteil 104 mit den darin unter Flur angeordneten individuelen Schub- und Verriegelungsstangen 4 ist dann lagesicher positioniert. Zum Entsperren der Verrastung sind in der Rückwand bzw. Teil-Rückwand der Bevorratungsbox 1 in einer Flucht mit den Rastnocken 67 liegende Ausnehmungen 74 vorgesehen (vgl. Fig. 9a), so daß die Verrastung für z.B. einen Schraubenzieher zugänglich ist, mit dem sich die Federzunge 65 von den Rastnocken 67 abheben läßt.

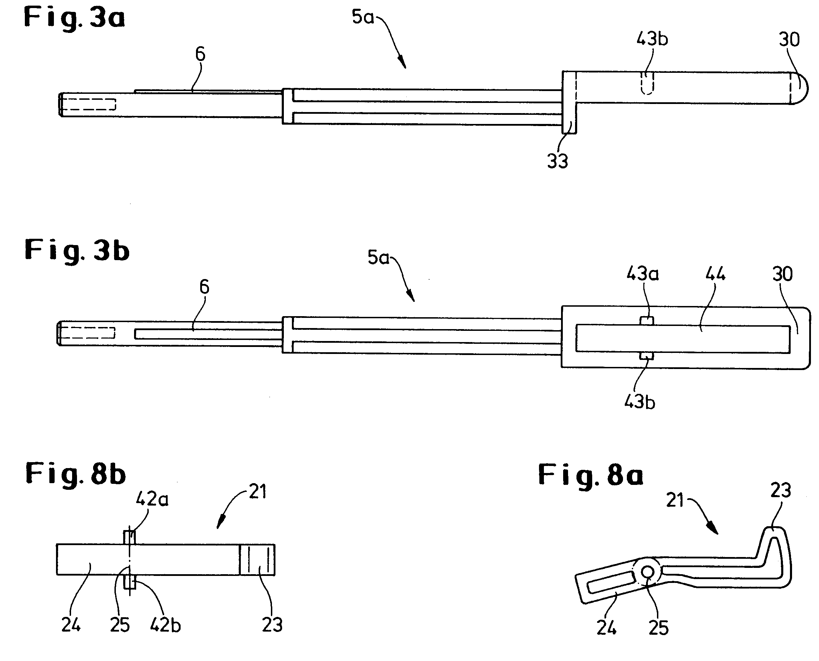

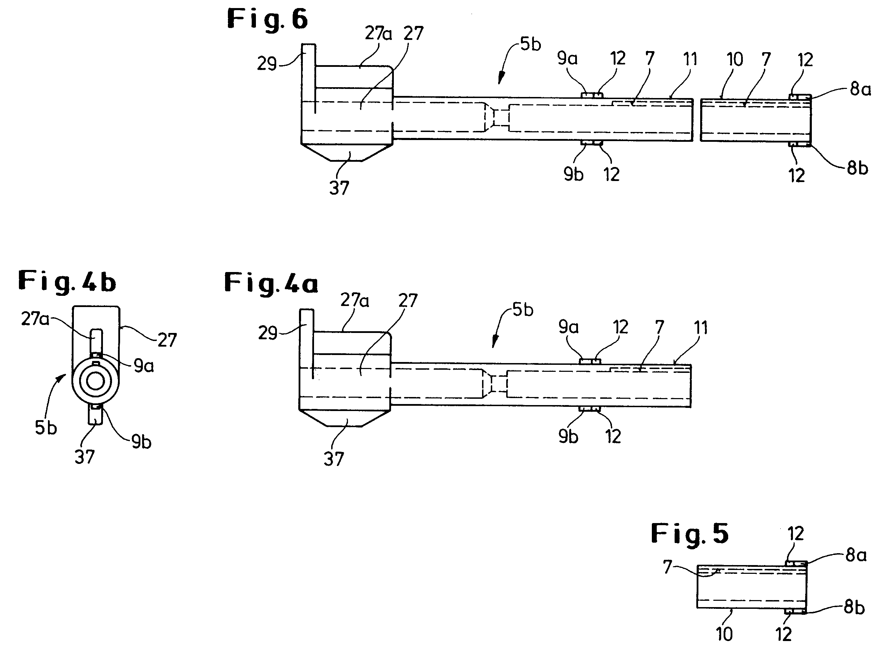

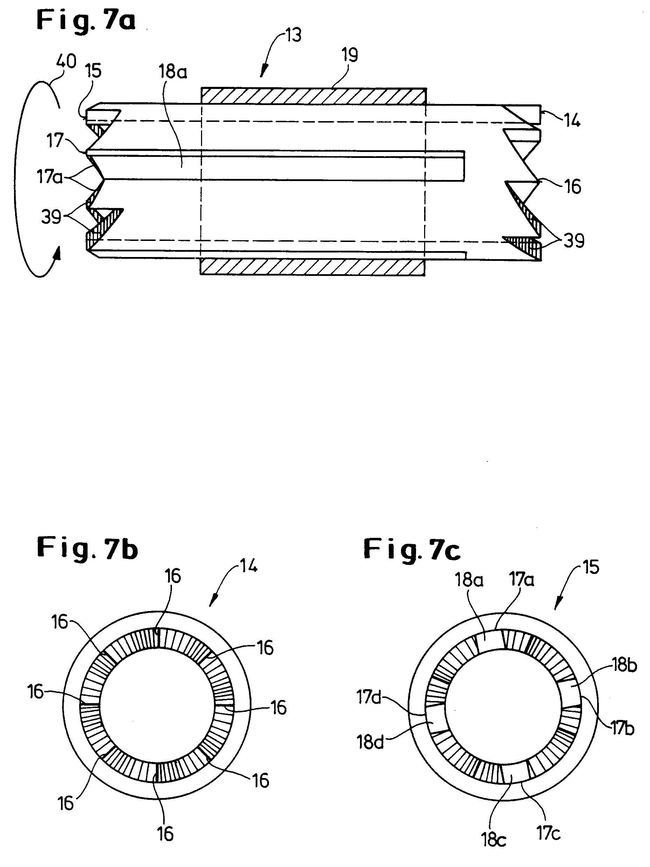

Die in Figur 2 näher dargestellte Schub- und Verriegelungsstange 4 ist zweiteilig; sie setzt sich aus den beiden ineinandersteckbaren und im Ausführungsbeispiel durch eine Schraube verbundenen Teilstangen 5a, 5b zusammen. Die hintere Teilstange 5b ist einstückig mit einer Schaltnockenhülse 11 ausgebildet (vgl. Fig. 5), und eine weitere Schaltnockenhülse 10 wird auf der vorderen Teilstange 5a angeordnet. Die Schaltnockenhülsen 10, 11 sind mit jeweils vier Schaltnocken 8a bis 9b - von diesen sind nur zwei dargestellt - versehen, die Schrägflächen 12 aufweisen. Um eine genaue Lage der Schaltnocken 8a bis 9b zueinander zu gewährleisten, ist auf der vordersten Teilstange 5a eine Paßfeder 6 (vgl. die Fig. 3a, 3b) angeordnet und die Schaltnockenhülse 10 bzw. der die Schaltnockenhülse 11 definierende Abschnitt der hinteren Teilstange 5b sind mit Paßfeder-Nuten 7 versehen (vgl. Fig. 6). Die Schaltnockenhülsen 10, 11 sind von einer Schalthülse 13 konzentrisch umschlossen. Die Stirnseiten 14, 15 der Schalthülse 13 sind mit Sägezähnen 16, 17 ausgebildet. An der rückwärtigen Stirnseite 15 ist jeder zweite Sägezahn 17a bis 17d durch Führungsnuten 18a bis 18d unterteilt (vgl. Figur 7a, 7b, 7c). Die Führungsnuten 18a bis 18d erstrecken sich achsparallel von der Stirnseite 15 zur vorderen Stirnseite 14 hin. Die Schalthülse 13 ist über eine Umfangsmanschette 19 unter Flur in dem Basisteil 104 eingebettet (vgl. Figur 7a).

Die vordere Teilstange 5a weist in einem rechteckigen Abschnitt an ihrer Betätigungsseite 20 einen schwenkbar gelagerten Sperrhebel 21 auf (vgl. Fig. 8a, 8b, 3a, 3b). Der Sperrhebel 21 ist an seinem der Betätigungsseite 20 zugewandten Ende 22 mit einem nach oben ragenden Vorsprung 23 (vgl. Fig. 8a, 8b) ausgebildet und weist seinem Schwenklager 25 vorgeschaltet ein nach unten abgewinkeltes Hebelteil 24 (vgl. Figur 8a) auf. Die hintere Teilstange 5b ist mit einem im Querschnitt L-förmigen Aufsatz 27 versehen, der eine Auflagefläche 27a besitzt, die in der Ebene 28 der Einstellfächer des Basisteils 104 liegt.

Nachfolgend wird anhand der Figuren 2 bis 8b das Einstellen und das Entnehmen einer CD oder dergl. durch die Schub- und Verriegelungsstange 4 erläutert.

Eine nur schematisch angedeutete CD 63 ist gemäß Figur 2 in das Aufnahmefach 2 eingestellt. Sie steht auf der Ebene 28 des Basisteils 104 und der Auflagefläche 27a des L-förmigen Aufsatzes 27 der Teilstange 5b. Dabei wird sie hinten von dem vertikalen Schenkel 29 des L-förmigen Aufsatzes 27 und vorne von dem nach oben ragenden Vorsprung 23 des Sperrhebels 21 nach oben hin übergriffen und damit in ihrer Lage begrenzt. Durch Druck auf die Stirnseite 30 der Schub- und Verriegelungsstange 4 wird diese gegen die Kraft einer Feder 31, die sich an stationären Stegen 32 des Basisteils 104 abstützt und von einer an der Teilstange 5a angeordneten Druckplatte 33 vorgespannt wird, unter Flur in Betätigungsrichtung 34 nach hinten geschoben. Die Schub- und Verriegelungsstange 4 liegt dabei mit ihrer vorderen Teilstange 5a auf einer Unterkante 35 der Wandöffnung 72 des Basisteils 104 auf und wird außerdem zwischen den stationären Stegen 32 geführt; weiterhin ist auch die hintere Teilstange 5b zwischen stationären Stegen 36 geführt. Die Unterseite 37 des L-förmigen Aufsatzes 27 stützt sich beim Schiebevorgang am Fachboden bzw. Zwischenboden 102 der Bevorratungsbox 1 ab.

Einhergehend mit dem Verschieben geben die Schaltnocken 9a, 9b, die zuvor mit den Sägezähnen 17 der hinteren Stirnseite 15 der Schalthülse 13 in Eingriff standen, die Schalthülse 13 frei; sie werden nämlich in Schubrichtung 34 von der Schalthülse 13 wegbewegt. Sychron dazu greifen die Schrägflächen 12 der vorderen Schaltnocken 8a, 8b an die Schrägflächen 39 der Sägezähne 16 an. Die Schalthülse 13 besitzt im Ausführungsbeispiel auf jeder Stirnseite eine Achterteilung der Schalt- bzw. Sägezähne 16, 17. Bei einem Hülsenumfang von 360^{o} entfallen auf jeden Sägezahn 16 bzw. 17 somit 45^{o} des Umfangs. Für eine einwandfreie Schaltfunktion sind die Zahnteilungen beider Stirnseiten der Schalthülse 13 um den halben Sägezahnwinkel gegeneinander versetzt, d.h. hier um 22,5^{o}. Alternativ könnten auch die Schaltnocken versetzt werden.

Durch weiteren Druck auf die Stirnseite 30 der Schub- und Verriegelungsstange 4 und dem dabei zunehmenden Formschluß zwischen der Schrägfläche 39 der Sägezähne 16 und den Schrägflächen 12 der Schaltnocken 8a, 8b wird die Schalthülse 13 zusammen mit der zwischen stationären Stegen 41a, 41b eingebetteten und gegen Axialbewegungen festgelegten Umfangsmanschette 19 in Umfangsrichtung 40 gedreht. Die hinteren Schaltnocken 9a, 9b befinden sich nun in einer Flucht mit den achsparallelen Führungsnuten 18a, 18b der Schalthülse 13 (vgl. Fig. 7a, 7b und 7c). Durch Wegnahme des Druckes auf die Schub- und Verriegelungsstange 4 wird diese von der sich entspannenden und gegen die Druckplatte 33 drückenden Feder 31 entgegen der Betätigungsrichtung 34 nach außen gedrückt. Die Schaltnocken 9a,9b schieben sich gleichzeitig in die mit ihnen fluchtenden Führungsnuten 18a, 18b. Die CD 63, die weiterhin zwischen dem vertikalen Schenkel 29 des L-förmigen Aufsatzes 27 und dem nach oben ragenden Vorsprung 23 des Schwenkhebels 21 ruht, wird jetzt über die Betätigungsseite 20 nach außen geschoben und kragt aus der Box 1 (vgl. Fig. 1) vor. Sobald der Sperrhebel 21, der über Lagerzapfen 42a, 42b in Lageraufnahmen 43a, 43b der Teilstange 5a schwenkbar gelagert ist, mit seinem abgewinkelten Hebelteil 24 auf die Unterkante 35 trifft, schwenkt der Sperrhebel 21 nach unten und der Vorsprung 23 taucht in eine Ausnehmung 44 der Teilstange 5a ein. Dadurch wird die CD 63 an ihrer Vorderseite freigegeben. Die Schub- und Verriegelungsstange 4 wird durch die sich weiter entspannende Feder 31 an der Betätigungsseite 20 soweit nach außen gedrückt, bis der L-förmige Aufsatz 27 an der Rückwand 45 des Basisteils 104 und die Druckplatte 33 an der Basisteil-Vorderwand liegt. Die CD 63 kann danach problemlos entnommen werden.

Wenn die CD 63 wieder in die Bevorratungsbox 1 eingelagert werden soll, stellt man die CD 63 zwischen zwei Längsstege 46a, 46b auf die Ebene 28 des Basisteils 104 (vgl. Fig. 1). Durch Druck auf die Stirnseite 30 wird die Schub- und Verriegelungsstange 4 gegen den Druck der sich dabei vorspannenden Feder 31 in Betätigungsrichtung 34 gedrückt. Dabei wird die CD 63 durch den nach oben ragenden Vorsprung 23 des Sperrhebels 21, der - sobald er die Unterkante 35 passiert hat - durch die Unterkante 35 nach oben geschwenkt wird, ins Innere des Aufnahmefaches 2 mitgenommen. Gleichzeitig rücken die hinteren Schaltnocken 9a, 9b aus den achsparallelen Führungsnuten 18a, 18b aus. Sobald sich die Schrägflächen 12 der vorderen Schaltnocken 8a, 8b an die Schrägflächen 39 der Sägezähne 16 der Stirnseite 14 der Schalthülse 13 anlegen, wird diese bei weiter anstehendem Druck auf die Stirnseite 30 und dem damit einhergehenden zunehmenden Formschluß der Schrägflächen 12 und 39 in Umfangsrichtung 41 weitergeschaltet.

Bei Wegnahme des Druckes auf die Stirnseite 30 der Schub- und Verriegelungsstange 4 wird diese von der sich entspannenden Feder 31 entgegen der Betätigungsrichtung 34 zurückgeschoben, bis die Schaltnocken 9a, 9b in zwei jetzt mit ihnen fluchtende Sägezähne 17 der Stirnseite 15 der weitergeschalteten Schalthülse 13 greifen. Dabei liegen die geraden Flächen der Schaltnocken 9a, 9b formschlüssig an den geraden Flächen der Sägezähne 17 an. Die Schalthülse 13 wird in der eingenommenen Position arretiert und die Schub- und Verriegelungsstange 4 gegen ein weiteres Verschieben gesperrt. Die CD 63 nimmt danach ihre endgültige Position ein.

Die Fig. 9a zeigt die Rückwände 47, 48 von zwei gleichen, mit ihren Seitenwänden 49, 50 aneinander stehenden Bevorratungsboxen 1 und 100. In den Eckbereichen 50a bis 50d und 51a, 51b der Rückwände 47, 48 sind Winkelrippen 52 mit parallel dazu verlaufenden inneren Winkelrippen 53 angeordnet; die Rückwände 47, 48 können hierbei - wie gezeigt- auf streifenartige Teilwände beschränkt werden, deren Abmessung von der Lage und Anordnung der Winkelrippen 52, 53 vorgegeben wird. Zu diesem Zweck ließen sich beispielsweise die vorhandenen Rückwände 64 der Aufnahmefächer 2 bzw. 3 ausnutzen. Alle Winkelrippen 52, 53 besitzen in ihren horizontalen Rippen 54 und vertikalen Rippen 55 Lageraugen 56 (vgl. Fig. 8b).

Ein in Fig. 9 dargestellter Schnellspannhebel 57 ist mit einem Schulterstück 58 ausgebildet, das in seitlich vorspringende Einrastzapfen 59,60 übergeht. Weiterhin ist der Schnellspannhebel 57 mit einer quadratischen Zentralöffnung 61 versehen. In Fig. 9a wird gezeigt, wie die zwei gleichen Bevorratungsboxen 1, 100 durch Schnellspannhebel 57 kraftschlüssig miteinander verbunden werden. Der Spannhebel 57 wird mit seinem Schulterstück 58 und den Einrastzapfen 59, 60 waagerecht, d.h. mit seinen Flachseiten in die horizontal nebeneinander liegenden Lageraugen 56 der vertikalen Rippen 55 beider Boxen 1, 100 eingeführt. Durch eine Drehung des Schnellspannhebels 57 um 90°, entweder nach oben oder nach unten, werden das Schulterstück 58 und die Einrastzapfen 59, 60 in den Lageraugen 56 gedreht. Die Lageraugen 56 werden dabei gespreizt, wodurch der Schnellspannhebel 57 eingerastet wird, der dann an den Rückwänden 47, 48 bündig anliegt. Die Rippenenden 62 der äußeren Winkelrippen 52 werden von der Zentralöffnung 61 des Schnellspannhebels 57 kraftschlüssig gegeneinander festgelegt.

In Fig. 11 ist das stationäre Festlegen von innere und äußere Winkelrippen 52, 53 aufweisenden Bevorratungsboxen 1 an eine Wandschiene 68 gezeigt, die zuvor in horizontaler oder - wie dargestellt - in vertikaler Lage an eine Wand angeschraubt worden ist. Die Wandschiene 68 ist mit Verriegelungsachsen 69 bestückt, die aus einem Rundprofil (vgl. Fig. 12c) hergestellt und mit zwei Flachseiten versehen sind; das vorstehend schon für den Schnellspannhebel beschriebene Spannprinzip findet folglich auch hier Anwendung. Zum Verschwenken und damit Verspannen der bei vertikaler Wandschiene 68 in die Lageraugen 56 der vertikal verlaufenden Rippen 55 (vgl. Fig. 92) der inneren Winkelrippen 53 eingeführten Verriegelungsachsen 69 ist auf den Achsen 69 ein Betätigungshebel 71 angeordnet und durch eine Schraube (vgl. in den Fig. 12a, 12b die Bohrung 72) gesichert. Die beiden in Fig. 11 oberen Verriegelungsachsen 69 sind in der Ausgangsposition gezeigt, in der sie den Lageraugen 56 der Winkelrippen 53 mit dem schulterartigen Außenradius zugewandt sind, d.h. flachseitig in die Lageraugen eingesetzt werden. Die verriegelte Position ist anhand der beiden unteren Verriegelungsachsen 69 zu erkennen, die durch Umklappen der Betätigungshebel 71 um 90^{o} entsprechend verschwenkt worden sind, was aufgrund des gegenüber dem Flachmaß größeren Radienmaßes ein Festspannen in den Lageraugen bewirkt.

## Patentansprüche

1. Bevorratungsbox, die mindestens ein Aufnahmefach aufweist, das durch Längsstege unterteilt ist, mit einer federbeaufschlagten Ein- und Ausrückmechanik zum selektiven Entnehmen und/oder Einstellen von CD's, Kassetten oder dergleichen,
**dadurch gekennzeichnet**,
daß der Ein- und Ausrückmechanismus individuelle, eine CD, Kassette oder dergleichen jeweils vorne und hinten über- bzw. untergreifende Schub- und Verriegelungsstangen (4) aufweist, die mit einer an ihren beiden Enden (6, 7) jeweils mit mindestens einem Schaltnocken (8a, 9a) ausgebildeten Schaltnockenhülse (10, 11) versehen sind, die konzentrisch von einer in Umfangsrichtung schrittweise weiterschaltbaren Schalthülse (13) umschlossen ist.

2. Bevorratungsbox nach Anspruch 1,
**dadurch gekennzeichnet**,
daß die Schub- und Verriegelungsstangen (4) in einem in das Aufnahmefach (2) einsetzbaren, die Längsstege ( 46a, 46b) aufweisenden Basisteil (104) unter Flur angeordnet sind.

3. Bevorratungsbox nach Anspruch 1 oder 2,
**dadurch gekennzeichnet**,
daß die Schalthülse (13) an ihren beiden Stirnseiten (14, 15) sägezahnförmig ausgebildet ist.

4. Bevorratungsbox nach Anspruch 3,
**dadurch gekennzeichnet**,
daß die Schalthülse (13) an ihrem von der Betätigungsseite (20) abgewandten Ende (15) an jedem zweiten Sägezahn (17a, 17b, 17c, 17d) mit achsparallelen Führungsnuten (18a, 18b, 18c, 18d) ausgebildet ist.

5. Bevorratungsbox nach Anspruch 4,
**dadurch gekennzeichnet**,
daß die Schalthülse (13) über eine Umfangsmanschette (19) in dem Basisteil (104) eingebettet ist.

6. Bevorratungsbox nach einem der Ansprüche 1 bis 5,
**dadurch gekennzeichnet**,
daß die Schub- und Verriegelungsstange (4) zweiteilig ist.

7. Bevorratungsbox nach Anspruch 6,
**dadurch gekennzeichnet**,
daß die beiden Teilstangen (5a, 5b) der Schub- und Verriegelungsstange (4) ineinander gesteckt sind.

8. Bevorratungsbox nach Anspruch 7,
**dadurch gekennzeichnet**,
daß die Schaltnocken (8a, 9a) zu den Sägezähnen (16, 17) der Schalthülse (13) komplementäre Schrägflächen (12) aufweisen.

9. Bevorratungsbox nach einem der Ansprüche 1 bis 8,
**dadurch gekennzeichnet**,
daß die betätigungsseitige, vordere Teilstange (5a) einen schwenkbar gelagerten Sperrhebel (21) aufweist

10. Bevorratungsbox nach Anspruch 9,
**dadurch gekennzeichnet**,
daß die Schub- und Verriegelungsstange (4 bzw. 5a, 5b) mit dem darin gelagerten Sperrhebel (21) betätigungsseitig aus dem Aufnahmefach (2) hervorragt und der Sperrhebel (21) an diesem vorderen Ende (22) mit einem nach oben ragenden Vorsprung (23) ausgebildet ist.

11. Bevorratungsbox nach Anspruch 10,
**dadurch gekennzeichnet**,
daß der Sperrhebel (21) hinter seinem Schwenklager (25) nach unten abgewinkelt ist.

12. Bevorratungsbox nach einem der Ansprüche 1 bis 11,
**dadurch gekennzeichnet**,
daß die hintere Teilstange (5b) einen Aufsatz (27) aufweist, der eine fluchtend mit der Ebene (28) des in das Aufnahmefach (2) eingesetzten Basisteils (104) verlaufende Auflagefläche (27a) aufweist.

13. Bevorratungsbox nach Anspruch 12,
**dadurch gekennzeichnet**,
daß der Aufsatz (27) im Querschnitt L-förmig ist.

14. Bevorratungsbox nach einem der Ansprüche 1 bis 13,
**dadurch gekennzeichnet**,
daß das Basisteil (104) an seiner Rückwand (45) mit einen hakenartigen, Rastnocken (67) des Fachbodens (102) hintergreifenden Rastkopf (66) aufweisenden Federzungen (65) ausgebildet ist.

15. Bevorratungsbox nach einem der Ansprüche 1 bis 14,
**gekennzeichnet**, **durch**
in den Eckbereichen (50a, 50b, 50c, 50d) an der Rückwand (47) der Bevorratungsbox (1) angeordnete Winkelrippen (52).

16. Bevorratungsbox nach Anspruch 15,
**dadurch gekennzeichnet**,
daß in jedem Eckbereich (50a, 50b, 50c, 50d) einer äußeren Winkelrippe (52) eine dazu parallel verlaufende innere Winkelrippe (53) zugeordnet ist.

17. Bevorratungsbox nach Anspruch 16,
**dadurch gekennzeichnet**,
daß die Winkelrippen (52, 53) mit Lageraugen (56) versehen sind.

18. Bevorratungsbox nach Anspruch 17,
**gekennzeichnet**, **durch**
einen Schnellspannhebel (57) mit einem abgeflachten, Außenradien aufweisenden Schulterstück (58), das mit seitlich vorspringenden, entsprechend abgeflachten Einrastzapfen (59, 60) ausgebildet ist.

19. Bevorratungsbox nach Anspruch 18
**dadurch gekennzeichnet**,
daß der Schnellspannhebel (57) eine von dem Schulterstück (58) beabstandete Zentralöffnung (61) aufweist.

20. Bevorratungsbox nach einem der Ansprüche 15 bis 19,
**dadurch gekennzeichnet**,
daß eine Wandschiene (68) mit in die Lageraugen (56) der Winkelrippen (52; 53) einrastbaren, an zwei gegenüberliegenden Seiten abgeflachten, schulterartige Außenradien aufweisenden Verriegelungsachsen (69) versehen ist.

21. Bevorratungsbox nach Anspruch 20,
**dadurch gekennzeichnet**,
daß sie mit rückseitigen Aussparungen (70) die Wandschiene (68) einschließt.

22. Bevorratungsbox nach Anspruch 20 oder 21,
**dadurch gekennzeichnet**,
daß auf jeder Verriegelungsachse (69) ein Betätigungshebel (71) angeordnet ist.
